# EUROPÄISCHE PATENTSCHRIFT

(11) **EP 1 746 129 B1**
(45) Veröffentlichungstag und Bekanntmachung des Hinweises auf die Patenterteilung: **14.01.2009**
(21) Anmeldenummer: 06014359.1
(22) Anmeldetag: 11.07.2006
(51) Int. Cl.: C08K 5/00, C08K 5/521

(54) **Halogenfreie, flammwidrige Polyurethanschaumstoffe**
Halogenfree, flameretardant polyurethane foams
Mousse de polyuréthane ignifugeante et sans halogènes

(30) Priorität: 22.07.2005 DE 102005034269
(43) Veröffentlichungstag der Anmeldung: 24.01.2007
(73) Patentinhaber: LANXESS Deutschland GmbH, 51369 Leverkusen (DE)
(72) Erfinder: Hansel, Jan-Gerd, Dr., 51069 Köln (DE); Tebbe, Heiko, Dr., 41539 Dormagen (DE); Dahmen, Hans, 51061 Köln (DE)

(56) Entgegenhaltungen:
- US-A- 3 081 331
- US-A- 3 869 526
- US-A- 5 547 614

## Beschreibung

Die vorliegende Erfindung betrifft flammwidrige Polyurethanschaumstoffe, die als Flammschutzmittel halogenfreie Tetraalkylbisphosphate enthalten, sowie ein Verfahren zur Herstellung solcher Schaumstoffe und deren Verwendungen.

Polyurethanschaumstoffe werden in vielen Bereichen, wie Möbel, Matratzen, Transport, Bau und technische Dämmung als Kunststoffe eingesetzt. Zum Erreichen hoher Flammschutzanforderungen, wie sie für Materialien u. a. für den Automobil-, Bahn- und Flugzeuginnenausstattungsbereich sowie für die Bauisolierung gefordert sind, müssen Polyurethanschaumstoffe in der Regel mit Flammschutzmitteln ausgerüstet werden. Hierzu ist eine Vielzahl unterschiedlicher Flammschutzmittel bekannt und kommerziell erhältlich. Deren Verwendung stehen allerdings vielfach erhebliche anwendungstechnische Probleme bzw. toxikologische Bedenken entgegen.

So treten bei Verwendung fester Flammschutzmittel wie z. B. Melamin, Ammoniumpolyphosphat und Ammoniumsulfat dosiertechnische Probleme auf, die vielfach Modifikationen der Verschäumanlagen, d. h. aufwändige Umbauten und Anpassungen notwendig machen.

Die häufig eingesetzten Flammschutzmittel Tris(chlorethyl)phosphat (Molgewicht 285 g/mol) und Tris(chlorisopropyl)phosphat (Molgewicht 327 g/mol) stellen leicht dosierbare Flüssigkeiten dar. Von offenzelligen Polyurethanweichschaumsystemen für die Automobil-Innenausstattung wird jedoch in letzter Zeit immer mehr gefordert, dass die gasförmigen Emissionen (Volatile Organic Compounds, VOC) und vor allem die kondensierbaren Emissionen (Fogging) aus diesen Schäumen niedrige Grenzwerte nicht überschreiten sollen. Diesen Anforderungen werden die oben genannten Flüssigkeiten aufgrund ihrer relativ niedrigen Molgewichte und der daraus resultierenden zu hohen Flüchtigkeit nicht mehr gerecht.

Unter Fogging versteht man die unerwünschte Kondensation von verdampften flüchtigen Bestandteilen aus der Kraftfahrzeug-Innenausstattung an Glasscheiben, insbesondere an der Windschutzscheibe. Diese Erscheinung kann nach DIN 75 201 quantitativ beurteilt werden. Die Automobilindustrie fordert typischerweise, dass das Fogging-Kondensat nach der Methode DIN 75201 B weniger als 1 mg betragen darf.

Das ebenfalls flüssige Tris(2,3-dichlorisopropyl)phosphat hat mit einem Molgewicht von 431 g/mol eine so niedrige Flüchtigkeit, dass damit gute Foggingwerte erreichbar sind. Allerdings werden aus ökotoxikologischen Gesichtspunkten sowie aufgrund verbesserter Brandnebenerscheinungen bezüglich Rauchgasdichte und Rauchgastoxizität häufig halogenfreie Flammschutzmittelsysteme bevorzugt. Auch aus anwendungstechnischen Gründen können halogenfreie Flammschutzmittel von besonderem Interesse sein. So beobachtet man z. B. bei der Verwendung von halogenierten Flammschutzmitteln starke Korrosionserscheinungen an den zur Flammkaschierung von Polyurethanschäumen verwendeten Anlagenteilen. Dies kann auf die bei der Flammkaschierung halogenhaltiger Polyurethanschäume auftretenden Halogenwasserstoffsäure-Emissionen zurückgeführt werden.

Als Flammkaschierung bezeichnet man ein Verfahren zur Verbindung von Textilien und Schaumstoffen, bei der eine Seite einer Schaumstofffolie mit Hilfe einer Flamme angeschmolzen und in unmittelbarem Anschluss daran mit einer Textilbahn verpresst wird.

Die bisher bekannten flüssigen halogenfreien Flammschutzmittelsysteme, wie z. B. Triethylphosphat oder andere Alkyl- oder Arylphosphate, wie beispielsweise Diphenylkresylphosphat, genügen den oben genannten Anforderungen an geringe VOC bzw. geringes Fogging nur unzureichend oder zeigen keine ausreichende Flammschutzwirkung.

In JP 2004339409 A2 und JP 2004352773 A2 wird Ethylenglykol-1,2-diphosphorsäuretetraethylester als Flammschutzmittel für Polyurethanschaumstoffe beschrieben. Aufgrund seines geringen Molgewichtes von 334 g/mol ist er zu flüchtig, um geringes Fogging zu ermöglichen.

Lösungen im Sinne niedriger Foggingbeiträge bieten hydroxylgruppentragende, reaktive Phosphorsäureester (DE-OS 43 42 972) oder Phosphonsäureester (DE-PS 199 27 548). Diese reagieren mit dem zur Schaumherstellung eingesetzten Polyisocyanat und werden so in das Polyurethan eingebaut. Daher zeigen sie nur sehr geringe Fogging-Beiträge. Allerdings ist ihre Verarbeitung schwierig, da sie die Isocyanatreaktionen während des Schäumens stören. Die Schaumqualität eines Polyurethanschaumstoffs ist von der Abstimmung des Katalysatorsystems auf die konkurrierenden Reaktionen der Polyisocyanate mit den Polyolen und gegebenenfalls dem Wasser abhängig. Wird nun mit einem hydroxylgruppentragenden Flammschutzmittel eine weitere reaktive Komponente eingebracht, so kann es zu Herstellfehlern kommen, wie beispielsweise Schrumpf oder Rissen. Das häufig aus mehreren Komponenten bestehende Katalysatorsystem muss dann unter Berücksichtigung der verwendeten Stabilisatoren, Treibmittel, Zellregulatoren und gegebenenfalls weiteren Bestandteilen auf die Reaktivität des Flammschutzmittels abgestimmt werden. Diese Abstimmung macht zeitintensive Entwicklungsarbeiten notwendig. Darüber hinaus muss eine zusätzliche Menge an Polyisocyanat eingesetzt werden, was aus wirtschaftlichen Gründen unerwünscht ist.

US 2,782,128 beschreibt die Anwendung von Tetraalkylestem aliphatischer Bisphosphorsäuren, wie beispielsweise Diethylenglykol-bis(dipropylphosphat) oder 1,4-Butylenglykol-bis(dipropyl-phosphat), als Weichmacher für Celluloseacetat. US 4,056,480 beschreibt die Anwendung von Tetraalkylestern aliphatischer Bisphosphorsäuren, wie beispielsweise Diethylenglykol-bis(dibutylphosphat), als hydraulische Flüssigkeiten. US 5,547,614 offenbart den Einsatz von organischen Diphosphaten im Gemisch mit als Flammschutzmittel wirkenden bromierten Diphenyloxiden. US 3,869,526 beschreibt die Verwendung von Diphosphaten als Weichmacher in PVC. US 3,081,331 offenbart den Einsatz hydroxylgruppenhaltiger polymerischer Diphosphate in Polyurethanschaumstoffen.

Es ist Aufgabe der vorliegenden Erfindung, halogenfrei flammgeschützte Polyurethanschaumstoffe mit niedrigem Fogging zur Verfügung zu stellen, die einfach zu verarbeitende Flammschutzmittel beinhalten.

Diese Aufgabe wird gelöst durch flammwidrige Polyurethanschaumstoffe, die als Flammschutzmittel halogenfreie, hydroxylgruppenfreie Tetraalkylbisphosphate mit einem Molgewicht von mindestens 350 g/mol enthalten.

Der Begriff "halogenfrei" bedeutet, dass die Tetraalkylbisphosphate die Elemente Fluor, Chlor, Brom und/oder lod nicht enthalten. Der Begriff "hydroxylgruppenfrei" bedeutet, dass die Tetraalkylbisphosphate keine an Kohlenstoffatome gebundenen OH-Gruppen tragen. Der Begriff "Tetraalkylbisphosphate" bezeichnet organische Substanzen, die pro Molekül zwei Phosphorsäureestergruppen -O-P(=O)(OR)₂ enthalten, wobei R allgemein für Alkylreste steht und die in einem Molekül enthaltenen Alkylreste R gleich oder verschieden sein können.

Die erfindungsgemäßen Polyurethanschaumstoffe enthalten bevorzugt Tetraalkylbisphosphate der allgemeinen Formel (I) 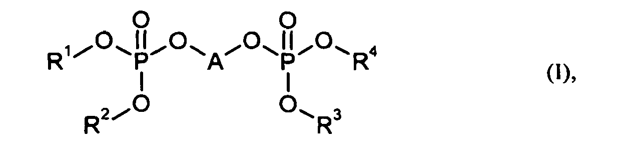 worin
- R¹, R², R³, R⁴: unabhängig voneinander für einen Rest C₁- bis C₈-Alkyl oder C₁- bis C₄-Alkoxy-ethyl stehen,
- A: für einen einen geradkettigen, verzweigten und/oder cyclischen C₄- bis C₂₀-Alkylenrest, eine Gruppierung -CH₂-CH=CH-CH₂-, eine Gruppierung -CH₂-C≡C-CH₂-, eine Gruppierung -CHR⁵-CHR⁶-(O-CHR⁷-CHR⁸)ₐ-, worin a eine Bahl von 1 bis 5 ist, eine Gruppierung -CHR⁵-CHR⁶-S(O)_{b}-CHR⁷-CHR⁸―, worin b eine Zahl von 0 bis 2 ist, oder eine Gruppierung ―(CHR⁵-CHR⁶)_{c}-O-R⁹-O-(CHR⁷-CHR⁸)_{d}―, worin c und d unabhängig voneinander Zahlen von 1 bis 5 sind, steht und
- R⁵, R⁶, R⁷, R⁸: unabhängig von einander für H oder Methyl stehen,
- R⁹: eine Gruppierung ―CH₂-CH=CH-CH₂―, eine Gruppierung ―CH₂-C≡C-CH₂―, ein 1,2-Phenylenrest, ein 1,3-Phenylenrest, ein 1,4-Phenylenrest, einen Rest der allgemeinen Formel (II), 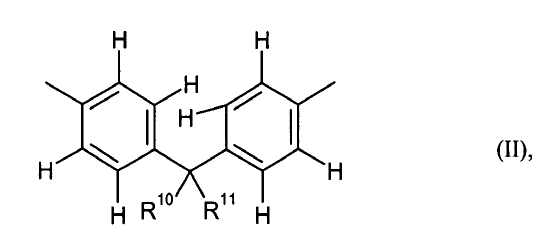
einen Rest der allgemeinen Formel (III), 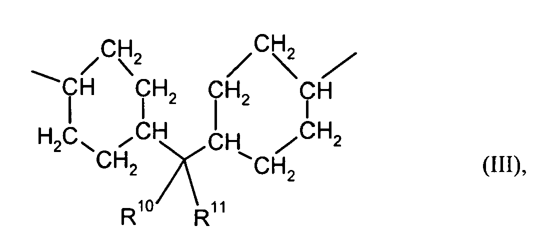 einen Rest der allgemeinen Formel (IV), 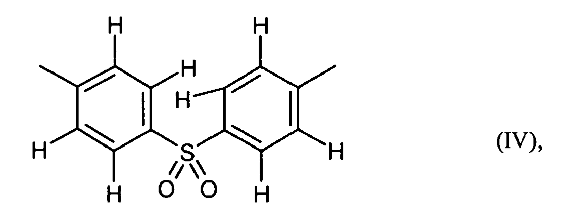 oder einen Rest der Formel -C(=O)-R12-C(=O)- steht,
- R¹⁰ und R¹¹: unabhängig voneinander für H oder C₁- bis C₄-Alkyl oder R¹⁰ und R¹¹ zusammen einen optional alkylsubstituierten Ring mit 4 bis 8 C-Atomen stehen und
- R¹²: für einen geradkettigen, verzweigten und/oder cyclischen C₂- bis C₈-Alkylenrest, einen 1,2-Phenylenrest, einen 1,3-Phenylenrest, oder einen 1,4-Phenylenrest
steht.

In einer weiteren besonders bevorzugten Ausführungsform sind R¹, R², R³ und R⁴ gleich und bedeuten entweder Ethyl, n-Propyl, iso-Propyl, n-Butyl oder n-Butoxyethyl.

In einer besonders bevorzugten Ausführungsform ist A ein geradkettiger C₄- bis C₆-Alkylenrest, oder ebenfalls eine Gruppierung der allgemeinen Formel (III) 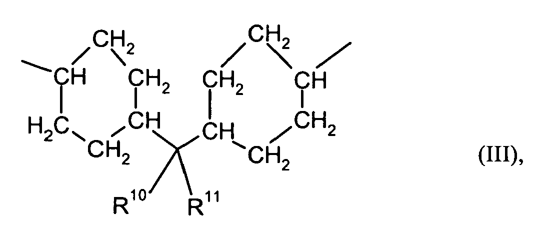 worin
- R¹⁰ und R¹¹: gleich sind und Methyl bedeuten, oder eine Gruppierung der Formeln (V,) (VI) oder (VII), 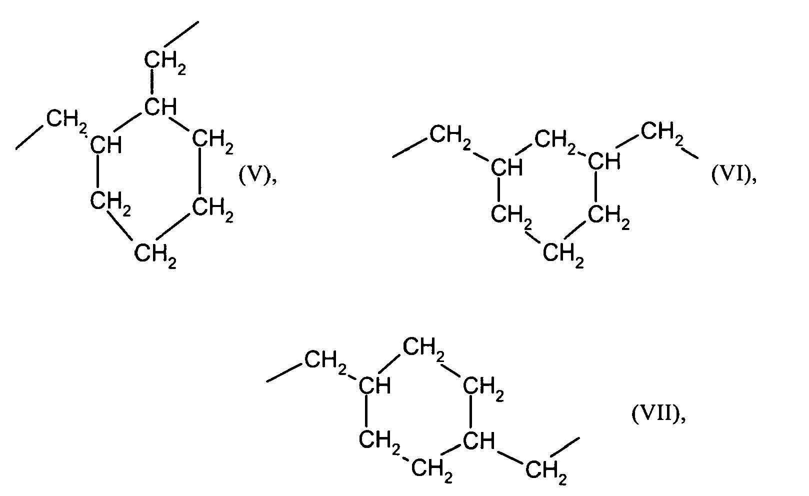
oder A ist eine Gruppierung -CHR⁵-CHR⁶-(O-CHR⁷-CHR⁸)ₐ-, worin a eine Zahl von 1 bis 2 ist und R⁵, R⁶, R⁷ und R⁸ gleich sind und H bedeuten, oder A ist eine Gruppierung -(CHR⁵-CHR⁶)_{c}-O-R⁹-O-(CHR⁷-CHR⁸)_{d}―, worin c und d unabhängig voneinander eine Zahl von 1 bis 2 sind, R⁹ eine Gruppierung der allgemeinen Formel (II) und R¹⁰ und R¹¹ gleich sind und Methyl bedeuten.

Insbesondere besonders bevorzugt enthalten die erfindungsgemäßen Polyurethanschaumstoffe eines oder mehrere der Tetraalkylbisphosphate der folgenden spezifischen Formeln (VIII) bis (XII):

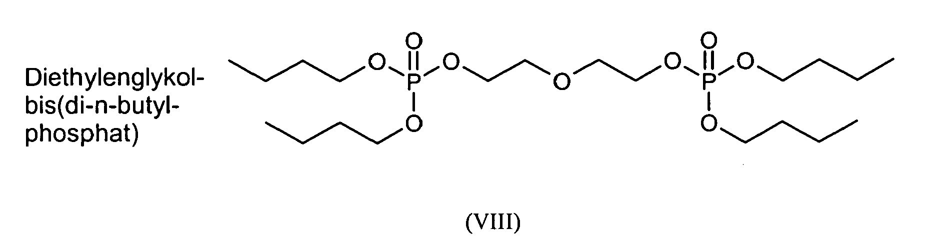

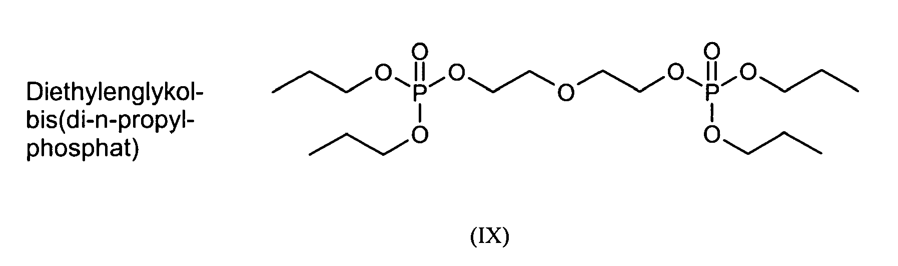

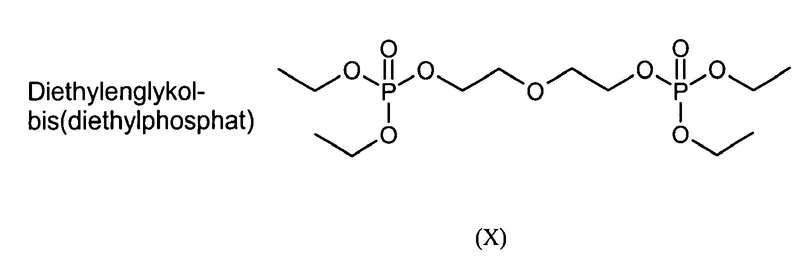

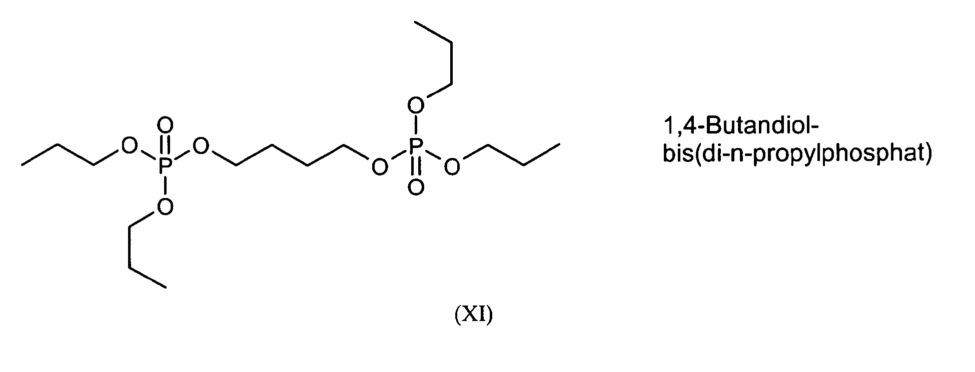

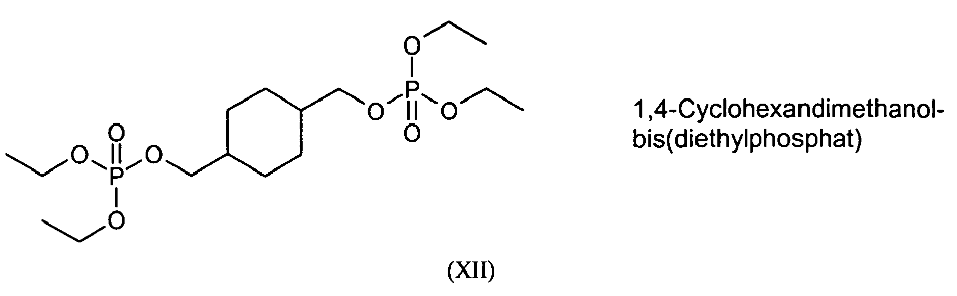

Bevorzugt handelt es sich bei den Tetraalkylbisphosphaten der allgemeinen Formel (I) um bei Verarbeitungstemperaturen flüssige Verbindungen. Unter der Verarbeitungstemperatur wird hierbei die Temperatur verstanden, bei der die Polyurethanrohstoffe den Dosier- und Mischaggregaten der Verschäumanlagen zugeführt werden. In der Regel werden hier in Abhängigkeit der Viskositäten der Komponenten und Auslegung der Dosieraggregate Temperaturen zwischen 15 und 90°C, bevorzugt zwischen 20 und 80°C gewählt.

Bevorzugt weisen die erfindungsgemäß einzusetzenden Tetraalkylbisphosphate eine niedrige Flüchtigkeit auf. Das heißt, dass die Flüchtigkeit der erfindungsgemäß einzusetzenden Tetraalkylbisphosphate niedriger ist, als die Flüchtigkeit von Tris(chlorisopropyl)phosphat.

Bevorzugt sind die erfindungsgemäß einzusetzenden Tetraalkylbisphosphate gegenüber anderen, zur Herstellung von Polyurethanschaumstoffen eingesetzten Edukten, insbesondere gegenüber Isocyanaten, nicht reaktiv. Diese Aussage bezieht sich auf die oben erläuterte Reaktivität von Flammschutzmitteln gegenüber Isocyanaten.

Die erfindungsgemäßen, flammgeschützten Polyurethanschaumstoffe werden hergestellt, indem man organische Polyisocyanate mit Verbindungen mit mindestens 2 gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart von halogenfreien, hydroxylgruppenfreien Tetraalkylbisphosphaten umsetzt.

Die Tetraalkylbisphosphate werden in einer Menge von 0,5 bis 30 Teilen, bevorzugt 3 bis 25 Teilen, bezogen auf 100 Teile Polyolkomponente, eingesetzt.

Bei den Polyurethanschaumstoffen handelt es sich um Schaumstoffe auf Isocyanatbasis, die vorwiegend Urethan- und/oder Isocyanurat- und/oder Allophanat- und/oder Uretdion- und/oder Harnstoff- und/oder Carbodiimidgruppen aufweisen. Die Herstellung von Schaumstoffen auf Isocyanatbasis ist bekannt und z. B. in DE-OS 16 94 142, DE-OS 16 94 215 und DE-OS 17 20 768 sowie im Kunststoff-Handbuch Band VII, Polyurethane, herausgegeben von G. Oertel, Carl-Hanser-Verlag München, Wien 1993, beschrieben.

Polyurethanschaumstoffe werden grob in weiche und harte Schaumstoffe unterschieden. Zwar können Weich- und Hartschaumstoffe grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf. Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf. Primär wird bei der Herstellung von Polyurethanen, die über die Reaktion von Polyolen mit Isocyanaten abläuft, über die Struktur und Molmasse des Polyols sowie über die Reaktivität und Anzahl (Funktionalität) der im Polyol enthaltenen Hydroxylgruppen die spätere Schaumstrukur und seine Eigenschaften beeinflusst. Weitere Einzelheiten zu Hart- und Weichschaumstoffen, den zu ihrer Herstellung einsetzbaren Edukten sowie zu Verfahren zu ihrer Herstellung finden sich in Norbert Adam, Geza Avar, Herbert Blankenheim, Wolfgang Friederichs, Manfred Giersig, Eckehard Weigand, Michael Halfmann, Friedrich-Wilhelm Wittbecker, Donald-Richard Larimer, Udo Maier, Sven Meyer-Ahrens, Karl-Ludwig Noble und Hans-Georg Wussow: "Polyurethanes", Ullmann's Encyclopedia of Industrial Chemistry Release 2005, Electronic Release, 7th ed., chap. 7 ("Foams"), Wiley-VCH, Weinheim 2005.

Bevorzugt weisen die erfindungsgemäßen Polyurethanschaumstoffe Raumgewichte von 16 - 130 kg/m³ auf. Besonders bevorzugt weisen sie Raumgewichte von 20 - 40 kg/m³ auf.

Für die Herstellung der Schaumstoffe auf Isocyanatbasis werden folgende Ausgangskomponenten eingesetzt:
1. Aliphatische, cycloaliphatische, araliphatische, aromatische und heterocyclische Polyisocyanate (z. B. W. Siefken in Justus Liebigs Annalen der Chemie, 562, S. 75-136), beispielsweise solche der Formel Q(NCO)ₙ, in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.
2. Verbindungen mit mindestens zwei gegenüber Isocyanaten reaktionsfähigen Wasserstoffatomen mit einem Molekulargewicht von 400 bis 8.000 g/mol ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen. Soll der Polyurethanschaum ein Weichschaum sein, so werden bevorzugt Polyole mit Molmassen von 2.000 bis 8.000 g/mol und 2 bis 6 Hydroxylgruppen pro Molekül eingesetzt. Soll hingegen ein Hartschaum hergestellt werden, so werden bevorzugt hochverzweigte Polyole mit Molmassen von 400 bis 1.000 g/mol und 2 bis 8 Hydroxylgruppen pro Molekül eingesetzt. Bei den Polyolen handelt es sich um Polyether und Polyester sowie Polycarbonate und Polyesteramide, wie sie für die Herstellung von homogenen und von zellförmigen Polyurethanen bekannt sind und wie sie etwa in der DE-OS 28 32 253 beschrieben werden. Die mindestens zwei Hydroxylgruppen aufweisenden Polyether und Polyester sind erfindungsgemäß bevorzugt.
   Die erfindungsgemäßen Polyurethanschaumstoffe lassen sich also durch entsprechende, leicht dem Stand der Technik zu entnehmende Wahl der Ausgangsstoffe als Hart- oder Weichschaumstoffe herstellen.
   Gegebenenfalls sind als weitere Ausgangskomponenten Verbindungen mit mindestens zwei gegenüber Isocyanaten reaktionsfähigen Wasserstoffatomen und einem Molekulargewicht von 32 bis 399 einsetzbar. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hiefür werden ebenfalls in der DE-OS 28 32 253 beschrieben.
3. Wasser und/oder leicht flüchtige organische Substanzen als Treibmittel, z. B. n-Pentan, i-Pentan, Cyclopentan, halogenhaltige Alkane, wie Trichlormethan, Methylenchlorid oder Chlorfluoralkane, CO₂ und andere.
4. Gegebenenfalls werden Hilfs- und Zusatzmittel mitverwendet, wie Katalysatoren der an sich bekannten Art, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der an sich bekannten Art, wie Paraffine oder Fettalkohole und Dimethylpolysiloxane sowie Pigmente oder Farbstoffe und weitere Flammschutzmittel, ferner Stabilisatoren gegen Alterungs- und Witterungseinflüsse, Kemverfärbungsinhibitoren, Weichmacher und fungistatisch und bakteriostatisch wirkende Substanzen sowie Füllstoffe, wie Bariumsulfat, Kieselgur, Ruß oder Schlämmkreide (DE-OS 27 32 292). Als Kernverfärbungsinhibitoren können insbesondere sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole enthalten sein.

Als weitere Flammschutzmittel neben den Tetraalkylbisphosphaten können in den erfindungsgemäßen Polyurethanschaumstoffen gegebenenfalls
a) organische Phosphorverbindungen, wie beispielsweise Triethylphosphat, Triphenylphosphat, Diphenylkresylphosphat, Trikresylphosphat, isopropylierte oder butylierte Arylphosphate, aromatische Bisphosphate, Neopentylglycol-bis(diphenylphosphat), chlorhaltige Phosphorsäureester wie z. B. Tris(chlorisopropyl)phosphat oder Tris(dichloropropyl)phosphat, Dimethylmethanphosphonat, Diethylethanphosphonat, Dimethylpropanphosphonat, oligomere Phosphate oder Phosphonate, Hydroxylgruppen-haltige Phosphorverbindungen, 5,5-Dimethyl-1,3,2-Dioxaphosphorinane-2-oxid-Derivate,
b) anorganische Phosphorverbindungen, wie beispielsweise Ammoniumphosphat, Ammoniumpolyphosphat, Melaminphosphat, Melaminpolyphosphat,
c) Stickstoffverbindungen, wie beispielsweise Melamin, Melamincyanurat,
d) Bromverbindungen, wie beispielsweise Alkylester einer Tetrabrombenzoesäure, bromhaltige Diole hergestellt aus Tetrabromphthalsäureanhydrid, bromhaltige Polyole, bromhaltige Diphenylether, oder
e) anorganische Flammschutzmittel, wie beispielsweise Aluminiumhydroxid, Boehmit, Magnesiumhydroxid, Blähgraphit oder Tonmineralien
enthalten sein.

Weitere Beispiele von gegebenenfalls erfindungsgemäß mitzuverwendenden oberflächenaktiven Zusatzstoffen und Schaumstabilisatoren sowie Zellreglern, Reaktionsverzögerem, Stabilisatoren, flammhemmenden Substanzen, Weichmachern, Farbstoffen und Füllstoffen sowie fungistatisch und/oder bakteriostatisch wirksamen Substanzen sowie Einzelheiten über Verwendungs- und Wirkungsweise dieser Zusatzmittel sind im Kunststoff-Handbuch, Band VII, Carl-Hanser-Verlag, München, 1993, auf den Seiten 104 bis 123 beschrieben.

Gegenstand der vorliegenden Erfindung ist aber auch ein Verfahren zur Herstellung von flammwidrigen Polyurethanschaumstoffen durch Umsetzung von organischen Polyisocyanaten mit Verbindungen mit mindestens 2 gegenüber Isocyanaten reaktionsfähigen Wasserstoffatomen und üblichen Treibmitteln, Stabilisatoren, Katalysatoren, Aktivatoren und/oder weiteren üblichen Hilfs- und Zusatzstoffen bei 20 bis 80 °C, dadurch gekennzeichnet, dass als Flammschutzmittel in einer Menge von 0,5 bis 30 Teilen, bezogen auf 100 Teile Polyolkomponente, halogenfreie, hydroxylgruppenfreie Tetraalkylbisphosphate mit einem Molgewicht von mindestens 350 g/mol eingesetzt werden.

In einer bevorzugten Ausführungsform werden beim erfindungesgemäßen Verfahren Tetraalkylbisphosphate der allgemeinen Formel (I) 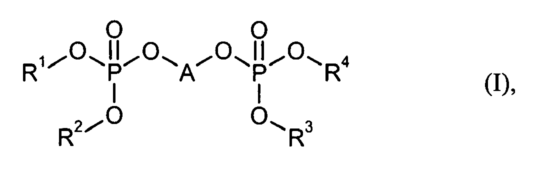 eingesetzt, worin
- R¹, R², R³, R⁴: unabhängig voneinander für einen Rest C₁- bis C₈-Alkyl oder C₁- bis C₄-Alkoxy-ethyl stehen,
- A: für einen geradkettigen, verzweigten und/oder cyclischen C₄- bis C₂₀-Alkylenrest, eine Gruppierung ―CH₂-CH=CH-CH₂―, eine Gruppierung ―CH₂-C≡C-CH₂―, eine Gruppierung ―CHR⁵-CHR⁶-(O-CHR⁷-CHR⁸)ₐ―, worin a eine Zahl von 1 bis 5 ist, eine Gruppierung -CHR⁵-CHR⁶-S(O)_{b}-CHR⁷-CHR⁸―, worin b eine Zahl von 0 bis 2 ist, oder eine Gruppierung ―(CHR⁵-CHR⁶)_{c}-O-R⁹-O-(CHR⁷-CHR⁸)_{d}―, worin c und d unabhängig voneinander Zahlen von 1 bis 5 sind, steht und
- R⁵, R⁶, R⁷, R⁸: unabhängig voneinander für H oder Methyl stehen,
- R⁹: für eine Gruppierung ―CH₂-CH=CH-CH₂―, eine Gruppierung ―CH₂-C≡C-CH₂―, ein 1,2-Phenylenrest, ein 1,3-Phenylenrest, ein 1,4-Phenylenrest, einen Rest der allgemeinen Formel (II), 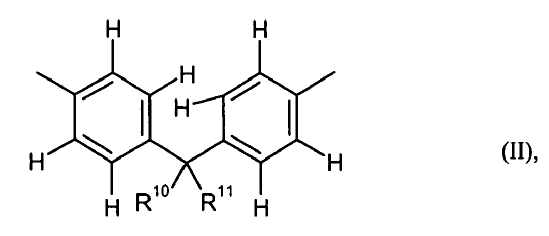 einen Rest der allgemeinen Formel (III), 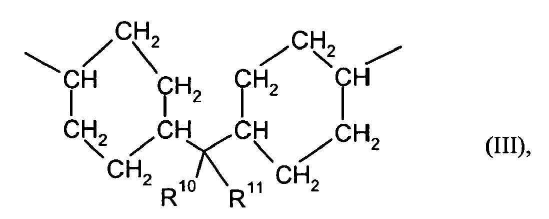 einen Rest der allgemeinen Formel (IV), 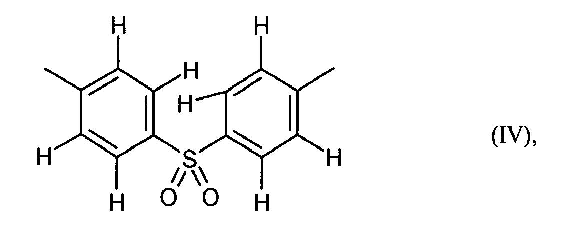 oder einen Rest der Formel -C(=O)-R¹²-C(=O)- steht,
- R¹⁰ und R¹¹: unabhängig voneinander für H oder C₁- bis C₄-Alkyl oder R¹⁰ und R¹¹ zusammen einen optional alkylsubstituierten Ring mit 4 bis 8 C-Atomen stehen und
- R¹²: für einen geradkettigen, verzweigten und/oder cyclischen C₂- bis C₈-Alkylenrest, einen 1,2-Phenylenrest, ein 1,3-Phenylenrest, oder einen 1,4-Phenylenrest steht.

In einer weiteren bevorzugten Ausführungsform sind R¹, R², R³ und R⁴ gleich und bedeuten entweder Ethyl, n-Propyl, iso-Propyl, n-Butyl oder n-Butoxyethyl.

In einer weiteren bevorzugten Ausführungsform ist A ein geradkettiger C₄- bis C₆-Alkylenrest oder ebenfalls eine Gruppierung der allgemeinen Formel (III), 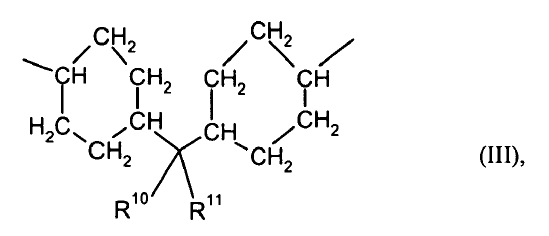 worin
- R¹⁰ und R¹¹: gleich sind und Methyl bedeuten, oder eine Gruppierung der Formeln (V), (VI) oder (VII), 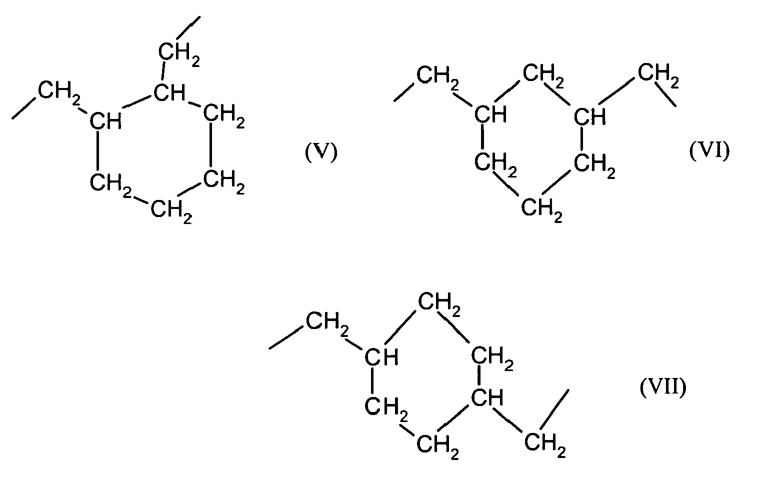
oder A ist eine Gruppierung ―CHR⁵-CHR⁶-(O-CHR⁷-CHR⁸)ₐ―, worin a eine Zahl von 1 bis 2 ist und R⁵, R⁶, R⁷ und R⁸ gleich sind und H bedeuten, oder

A ist eine Gruppierung ―(CHR⁵-CHR⁶)_{c}-O-R⁹-O-(CHR⁷-CHR⁸)_{d}―, worin c und d unabhängig voneinander eine Zahl von 1 bis 2 sind, R⁹ eine Gruppierung der allgemeinen Formel II und R¹⁰ und R¹¹ gleich sind und Methyl bedeuten.

Insbesondere besonders bevorzugt werden in dem erfindungsgemäßen Verfahren eines oder mehrere der Tetraalkylbisphosphate der folgenden spezifischen Formeln (VIII) bis (XII) eingesetzt.

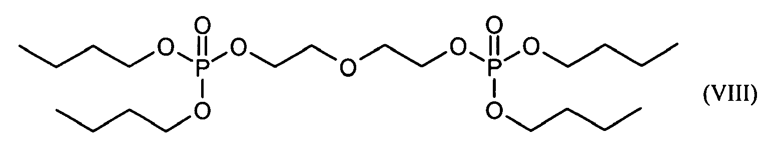

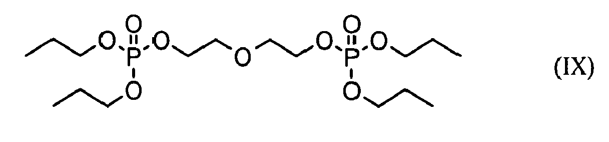

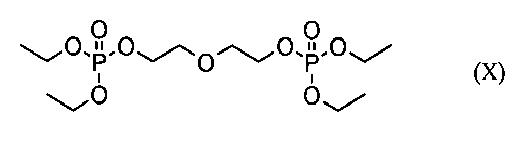

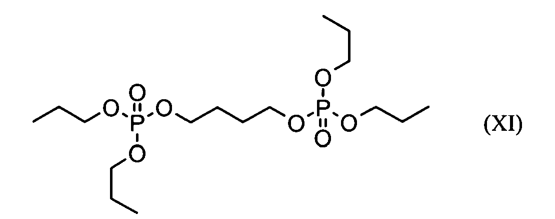

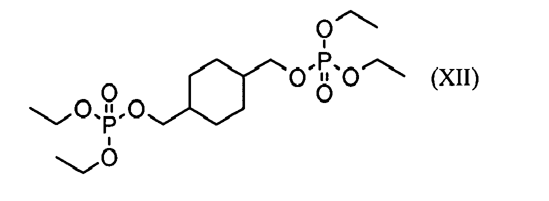

Bei der Durchführung des Verfahrens zur Herstellung der erfindungsgemäßen Polyurethanschaumstoffe werden die oben beschriebenen Reaktionskomponenten nach dem bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US 2,764,565 beschrieben werden. Einzelheiten über Verarbeitungseinrichtungen, die auch erfindungsgemäss in Frage kommen, werden im Kunststoff-Handbuch Band VII, Polyurethane, herausgegeben von G. Oertel, Carl-Hanser-Verlag, München, Wien 1993, auf den Seiten 139 bis 192 beschrieben.

Nach dem erfindungsgemäßen Verfahren lassen sich auch kalthärtende Schaumstoffe herstellen (GB-PS 11 62 517, DE-OS 21 53 086). Selbstverständlich können aber auch Schaumstoffe durch Blockverschäumung oder nach dem bekannten Doppeltransportbandverfahren hergestellt werden.

Polyisocyanuratschaumstoffe werden nach den hierfür bekannten Verfahren und Bedingungen hergestellt.

Das erfindungsgemäße Verfahren erlaubt die Herstellung von flammgeschützten Polyurethanschaumstoffen als Hart- oder Weichschäume in kontinuierlicher oder diskontinuierlicher Herstellungsweise oder als geschäumte Formartikel. Bevorzugt ist das erfindungsgemäße Verfahren bei der Herstellung von Weichschaumstoffen, die durch ein Blockverschäumungsverfahren hergestellt werden.

Die nach der Erfindung erhältlichen Produkte finden z. B. folgende Anwendung: Möbelpolsterungen, Textileinlagen, Matratzen, Sitze, bevorzugt Flugzeugsitze oder Automobilsitze, Armlehnen und Bauelemente sowie Sitz- und Armaturverkleidungen.

Die in den erfindungsgemäßen Polyurethanschaumstoffen enthaltenen beziehungsweise im erfindungsgemäßen Verfahren eingesetzten Tetraalkylbisphosphate sind entweder bekannt oder lassen sich nach bekannten Methoden herstellen. Dabei kommen im industriellen Maßstab verfügbare Ausgangsmaterialien zum Einsatz, die die gewünschten Endprodukte einfach herzustellen erlauben.

Die Herstellung der Verbindung (VIII) Diethylenglykol-bis(di-n-butylphosphat), Molgewicht 491 g/mol, CAS Reg.-No. 62955-03-7, aus Diethylenglykol, Phosphoroxychlorid und n-Butanol ist in US 4,056,480, Beispiele 1 und 2, Sp. 7, Z. 4 - 38, beschrieben.

Die Herstellung der Verbindung (IX) Diethylenglykol-bis(di-n-propylphosphat), Molgewicht 434 g/mol, CAS Reg.-No. 109598-81-4, aus Diethylenglykol, Phosphortrichlorid, Chlor und n-Propanol ist in US 2,782,128, Beispiel 1, Sp. 2, Z. 47 - Sp. 3, Z. 21, beschrieben.

Die Verbindung (X) Diethylenglykol-bis(diethylphosphat), Molgewicht 378 g/mol, CAS Reg.-No. 500347-73-9, lässt sich nach dem in US 4,056,480 angegebenen Verfahren zur Herstellung der Verbindung (VIII) unter Verwendung von Diethylenglykol, Phosphoroxychlorid und Ethanol herstellen.

Die Herstellung der Verbindung (XI) 1,4-Butandiol-bis(di-n-propylphosphat), Molgewicht 418 g/mol, CAS Reg.-No. 109441-43-2, aus 1,4-Butandiol, Phosphortrichlorid, Chlor und n-Propanol ist in US 2,782,128, Beispiel 3, Sp. 3, Z. 35 - Sp. 4, Z. 3, beschrieben.

Die Verbindung (XII) 1,4-Cyclohexandimethanol-bis(diethylphosphat), Molgewicht 416 g/mol, lässt sich nach dem in US 4,056,480, Sp. 8, Z. 5 - 39, angegebenen Verfahren zur Herstellung von 1,4-Cyclohexandimethanol-bis(di-n-butylphosphat), CAS Reg.-No. 62955-05-9, unter Verwendung von 1,4-Cyclohexandimethanol, Phosphoroxychlorid und Ethanol herstellen.

Die flüssigen Tetraalkylbisphosphate sind gut zu dosieren. Sie reagieren nicht mit den anderen zur Herstellung der Polyurethanschaumstoffe eingesetzten Ausgangsstoffen und sind daher als Additive sehr leicht zu verarbeiten. Überraschenderweise lassen sich mit den Tetraalkylbisphosphaten Schaumstoffe herstellen, die nicht nur den Anforderungen an Flammwidrigkeit entsprechen, sondern auch besonders niedrige Foggingwerte zeigen.

Anhand der nachfolgenden Beispiele wird die Erfindung näher erläutert, ohne dass dadurch eine Einschränkung der Erfindung bewirkt werden soll.

### Beispiele

### Polyurethanweichschaum

Die angegebenen Teile beziehen sich auf das Gewicht.

### Verwendete Materialien

| Komponente | Funktion | Beschreibung |
|---|---|---|
| A | Polyol | Arcol^{®} 1105 (Bayer MaterialScience), Polyetherpolyol mit OHZ 56 mg KOH/g |
| B | Treibmittel | Wasser |
| C | Katalysator | Niax^{®} A-1 (GE Silicones), 70 %ige Lösung von Bis(2-dimethylaminoethyl)ether in Dipropylenglykol |
| D | Katalysator | Desmorapid^{®} SO (Rheinchemie), Zinn-(II)-2-ethylhexanoat |
| E | Stabilisator | Tegostab^{®} B 8232 (Degussa), Siliconstabilisator |
| F1 | Flammschutzmittel | Tris(chlorisopropyl)phosphat, TCPP, CAS-Reg.-No. 13674-84-5 |
| F2 | Flammschutzmittel | Tris(2,3-dichlorisopropyl)phosphat, TDCP, CAS Reg.-No. 13674-87-8 |
| F3 | Flammschutzmittel | Diphenylkresylphosphat, CAS Reg.-No. 26444-49-5 |
| F4 | Flammschutzmittel | Diethylenglykol-bis(diethylphosphat), Formel X, CAS Reg.-No. 500347-73-9 |
| G | Diisocyanat | Desmodur^{®} T 80 (Bayer MaterialScience), Toluylendiisocyanat, Isomerenmischung |

### Herstellung von Polyurethanweichschaumstoffen

Die in Tabelle 1 nach Art und Menge angegebenen Komponenten mit Ausnahme des Diisocyanats (Komponente G) wurden zu einer homogenen Mischung verrührt. Dann wurde das Diisocyanat zugefügt und kurz intensiv untergerührt. Nach einer Startzeit von 15 - 20 s und einer Steigzeit von 200 - 220 s wurde ein Polyurethanweichschaumstoff mit einem Raumgewicht von 33 kg/m³ erhalten.

### Bestimmung der Flammwidrigkeit

Die Polyurethanweichschaumstoffe wurden nach den Vorgaben des Federal Motor Vehicle Safety Standards FMVSS-302 getestet und den Brandklassen SE (selbsterlöschend), SE/NBR (selbsterlöschend/keine Brennrate), SE/B (selbsterlöschend/mit Brennrate), BR (Brennrate) und RB (schnell brennend) zugeordnet. Die Brandversuche wurden für jedes Beispiel fünfmal durchgeführt. Das schlechteste Ergebnis jeder Fünferreihe ist in Tabelle 1 wiedergegeben.

### Bestimmung des Foggings

Das Foggingverhalten der Polyurethanweichschaumstoffe wurde gemäß DIN 75201 B untersucht. Die gemessenen Kondensatmengen sind in Tabelle 1 wiedergegeben.

**Tabelle 1: Zusammensetzung (Teile) und Prüfergebnisse des erfindungsgemäßen Beispiels B1 und der nicht erfindunsgemäßen Vergleichsbeispiele V1 bis V4**

| **Beispiel** | **V1** | **V2** | **V3** | **V4** | **B1** |
|---|---|---|---|---|---|
| A | 100 | 100 | 100 | 100 | 100 |
| B | 3,0 | 3,0 | 3,0 | 3,0 | 3,0 |
| C | 0,10 | 0,10 | 0,10 | 0,10 | 0,10 |
| D | 0,13 | 0,13 | 0,13 | 0,13 | 0,13 |
| E | 0,80 | 0,80 | 0,80 | 0,80 | 0,80 |
| F1 | | 6 | | | |
| F2 | | | 6 | | |
| F3 | | | | 6 | |
| F4 | | | | | 6 |
| G | 40,9 | 40,9 | 40,9 | 40,9 | 40,9 |
| MVSS-Klasse | RB | nicht bestimmt | SE | BR | SE |
| Fogging-Kondensat [mg] gemäß DIN 75201 B | 0,3 | 17,8 | 0,8 | 0,8 | 0,8 |

### Ergebnisse

In Abwesenheit eines Flammschutzmittels (Vergleichsbeispiel V1) brennt der Polyurethanweichschaumstoff rasch ab, zeigt aber einen sehr niedrigen Foggingwert. Die Ausrüstung mit dem häufig verwendeten Flammschutzmittel Tris(chlorisopropyl)phosphat (Vergleichsbeispiel V2) führt zu stark erhöhtem Fogging. Erst ein Schaumstoff mit Tris(2,3-dichlorisopropyl)phosphat (Vergleichsbeispiel V3) kann den von der Automobilindustrie geforderten Foggingwert von maximal 1 mg Kondensat einhalten und die beste Brandklasse SE (selbsterlöschend) in allen Wiederholungen des Brandversuchs erreichen. Tris(2,3-dichlorisopropyl)phosphat bringt aber die oben beschriebenen Nachteile eines halogenhaltigen Flammschutzmittels mit. Mit der Verwendung des halogenfreien Flammschutzmittels Diphenylkresylphosphat (Vergleichsbeispiel V4) wird dieses Problem zwar umgangen und auch ein niedriger Foggingwert erreicht, aber die Flammschutzwirkung ist unzureichend. Das Beispiel 1 zeigt, dass sich die erfindungsgemäßen, halogenfreien Polyurethanweichschaumstoffe durch die beste Brandklasse SE (selbsterlöschend) in allen Wiederholungen des Brandversuchs und durch einen sehr niedrigen Foggingwert auszeichnen.

### Polyurethanhartschaum

Die angegebenen Teile beziehen sich auf das Gewicht.

### Verwendete Materialien

| **Komponente** | **Funktion** | **Beschreibung** |
|---|---|---|
| A | Polyol | Stepanol^{®} PS-2352 (Stepan), Polyesterpolyol mit OHZ 240 mg KOH/g |
| B | Treibmittel | Wasser |
| C | Treibmittel | n-Pentan |
| D | Katalysator | DABCO^{®} K-15 (Air Products), Kaliumoctoat-Formulierung |
| E | Katalysator | DABCO^{®} 2097 (Air Products), Kaliumacetat-Formulierung |
| G | Katalysator | Polycat^{®} 5 (Air Products), Pentamethyldiethylentriamin |
| H | Stabilisator | DABCO^{®} DC-5598 (Air Products), Siliconstabilisator |
| I | Diisocyanat | Desmodur^{®} 44 V 40 L (Bayer MaterialScience), polymeres Diphenylmethandiisocyanat, Isocyanat-Gehalt: 31,5 Gew.-% |
| F1 | Flammschutzmittel | Tris(chlorisopropyl)phosphat, TCPP, CAS-Reg.-No. 13674-84-5 |
| F2 | Flammschutzmittel | Triethylphosphat, TEP, CAS Reg.-No. 78-40-0 |
| F3 | Flammschutzmittel | Diethylenglykol-bis(diethylphosphat), Formel X, CAS Reg.-No. 500347-73-9 |

### Herstellung von Polyurethanhartschaumstoffen

Die in Tabelle 2 nach Art und Menge angegebenen Komponenten mit Ausnahme des Diisocyanats (Komponente I) wurden zu einer homogenen Mischung verrührt. Dann wurde das Diisocyanat zugefügt und kurz intensiv untergerührt. Nach einer Startzeit von 10 - 15 s und einer Steigzeit von 40 - 50 s wurde ein Polyurethanhartschaumstoff mit einem Raumgewicht von 28 kg/m³ erhalten.

### Bestimmung der Flammwidrigkeit

Die Polyurethanhartschaumstoffe wurden nach den Vorgaben von DIN 4102-1 getestet und den Brandklassen B2 (normalentflammbar) oder B3 (leichtentflammbar) zugeordnet. Bei diesem Kleinbrennertest wird die Flammhöhe bei einer Beflammung von 15 s bestimmt. Sie ist ein Maß für die Effektivität eines Flammschutzmittels.

**Tabelle 2: Zusammensetzung (Teile) und Prüfergebnisse des erfindungsgemäßen Beispiels B2 und der nicht erfindunsgemäßen Vergleichsbeispiele V5 bis V6**

| **Beispiel** | **V5** | **V6** | **B2** |
|---|---|---|---|
| A | 100 | 100 | 100 |
| B | 0,5 | 0,5 | 0,5 |
| C | 24,3 | 24,3 | 24,3 |
| D | 1,9 | 1,9 | 1,9 |
| E | 0,35 | 0,35 | 0,35 |
| G | 0,25 | 0,25 | 0,25 |
| H | 2,5 | 2,5 | 2,5 |
| I | 205 | 205 | 205 |
| F1 | 25 | | |
| F2 | | 25 | |
| F3 | | | 25 |
| DIN 4102-1 Klasse | B2 | B3 | B2 |
| Mittlere Flammhöhe [mm] | 143 | 146 | 125 |

### Ergebnisse

Die Versuche zeigen, dass mit dem halogenhaltigen Flammschutzmittel TCPP (Vergleichsbeispiel V5) eine B2-Klassifizierung erreicht wird, wogegen mit der gleichen Menge des halogenfreien Flammschutzmittels TEP (Vergleichsbeispiel V6) nur die Klassifizierung B3 erreicht werden kann. Das Beispiel B2 mit dem erfindungsgemäßen halogenfreien Flammschutzmittel dagegen erreicht die Klassifizierung B2 mit einer niedrigeren mittleren Flammhöhe als das Vergleichsbeispiel 1 mit dem halogenhaltigen Flammschutzmittel TCPP.

## Patentansprüche

1. Flammwidrige Polyurethanschaumstoffe, die als Flammschutzmittel halogenfreie, hydroxylgruppenfreie Tetraalkylbisphosphate mit einem Molgewicht von mindestens 350 g/mol enthalten.

2. Flammwidrige Polyurethanschaumstoffe nach Anspruch 1, die als Flammschutzmittel halogenfreie, hydroxylgruppenfreie Tetraalkylbisphosphate der allgemeinen Formel (I) 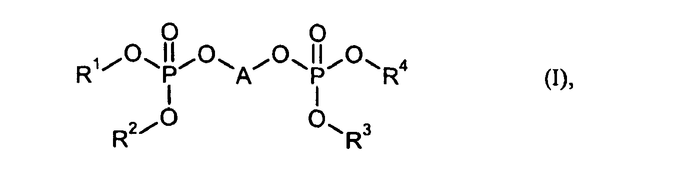 enthalten, worin
R¹, R², R³, R⁴ unabhängig voneinander für einen Rest C₁- bis C₈-Alkyl oder C₁- bis C₄-Alkoxyethyl stehen,
A für einen geradkettigen, verzweigten und/oder cyclischen C₄- bis C₂₀-Alkylenrest, eine Gruppierung -CH₂-CH=CH-CH₂-, eine Gruppierung -CH₂-C≡C-CH₂-, eine Gruppierung -CHR⁵-CHR⁶-(O-CHR⁷-CHR⁸)ₐ-, worin a eine Zahl von 1 bis 5 ist, eine Gruppierung -CHR⁵-CHR⁶-S(O)_{b}-CHR⁷-CHR⁸-, worin b eine Zahl von 0 bis 2 ist, oder eine Gruppierung -(CHR⁵-CHR⁶_{c}-O-R⁹-O-(CHR⁷-CHR⁸)_{d}-, worin c und d unabhängig voneinander Zahlen von 1 bis 5 sind, steht,
R⁵, R⁶, R⁷, R⁸ unabhängig voneinander für H oder Methyl stehen,
R⁹ für eine Gruppierung -CH₂-CH=CH-CH₂-, eine Gruppierung -CH₂-C≡C-CH₂-, ein 1,2-Phenylenrest, ein 1,3-Phenylenrest, ein 1,4-Phenylenrest, einen Rest der allgemeinen Formel (II), 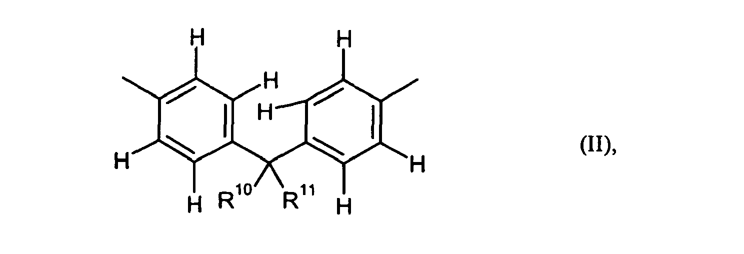 einen Rest der allgemeinen Formel (III), 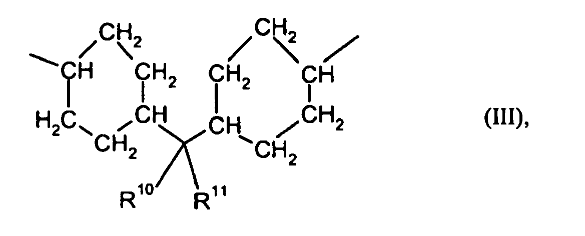 einen Rest der allgemeinen Formel (IV), 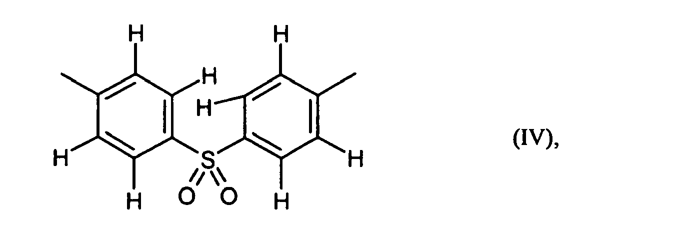 oder einen Rest der Formel -C(=O)-R¹²-C(=O)- steht,
R¹⁰ und R¹¹ unabhängig voneinander für H oder C₁- bis C₄-Alkyl oder R¹⁰ und R¹¹ zusammen einen optional alkylsubstituierten Ring mit 4 bis 8 C-Atomen steht und
R¹² für einen geradkettigen, verzweigten und/oder cyclischen C₂- bis C₈-Alkylenrest, einen 1,2-Phenylenrest, einen 1,3-Phenylenrest, oder einen 1,4-Phenylenrest steht.

3. Flammwidrige Polyurethanschaumstoffe nach Anspruch 2, **dadurch gekennzeichnet, dass** A einen geradkettigen C₄- bis C₆-Alkylenrest, eine Gruppierung der Formel (VII), 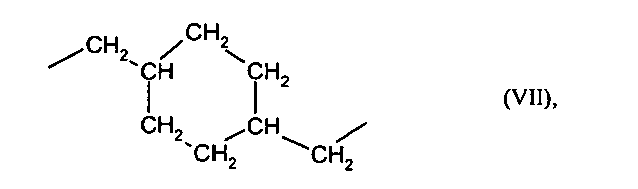 oder eine Gruppierung -CHR⁵-CHR⁶-(O-CHR⁷-CHR⁸)ₐ-, worin a eine Zahl von 1 bis 3 ist und R⁵, R⁶, R⁷ und R⁸ alle gleich H sind, bedeutet.

4. Flammwidrige Polyurethanschaumstoffe nach mindestens einem der Ansprüche 1 bis 3, **dadurch gekennzeichnet, dass** es sich bei den Tetraalkylbisphosphaten um Diethylenglykol-bis(di-n-butylphosphat), Diethylenglykol-bis(di-n-propylphosphat), Diethylenglykol-bis(diethylphosphat), 1,4-Butandiol-bis(di-n-propylphosphat), oder 1,4-Cyclohexandimethanol-bis(diethylphosphat) handelt.

5. Flammwidrige Polyurethanschaumstoffe nach mindestens einem der Ansprüche 1 bis 4, **dadurch gekennzeichnet, dass** neben den Tetraalkylbisphosphaten weitere bekannte Flammschutzmittel eingesetzt werden.

6. Flammwidrige Polyurethanschaumstoffe nach mindestens einem der Ansprüche 1 bis 5, **dadurch gekennzeichnet, dass** es sich dabei um Weichschaumstoffe oder um Hartschaumstoffe handelt.

7. Verfahren zur Herstellung von flammwidrigen Polyurethanschaumstoffen durch Umsetzung von organischen Polyisocyanaten mit Verbindungen mit mindestens 2 gegenüber Isocyanaten reaktionsfähigen Wasserstoffatomen und üblichen Treibmitteln, Stabilisatoren, Aktivatoren und/oder weiteren üblichen Hilfs- und Zusatzstoffen bei 20 bis 80 °C, **dadurch gekennzeichnet, dass** als Flammschutzmittel in einer Menge von 0,5 bis 30 Teilen, bezogen auf 100 Teile Polyolkomponente, halogenfreie, hydroxylgruppenfreie Tetraalkylbisphosphate mit einem Molgewicht von mindestens 350 g/mol eingesetzt werden.

8. Verwendung der Polyurethanschaumstoffe gemäß Anspruch 1 in Möbelpolsterungen, Textileinlagen, Matratzen, Sitzen, Armlehnen, Bauelementen sowie Sitz- und Armaturverkleidungen.

## Claims

1. Flame-retardant polyurethane foams which comprise, as flame retardant, halogen-free tetraalkyl bisphosphates which are free from hydoxy groups and whose molar mass is at least 350 g/mol.

2. Flame-retardant polyurethane foams according to Claim 1, which, as flame retardant, comprise halogen-free tetraalkyl bisphosphates of the general formula (I) which are free from hydroxy groups 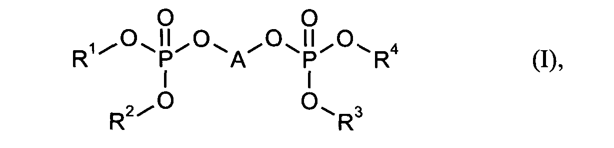 in which
R¹, R², R³, and R⁴ , independently of one another, are a C₁-C₈-alkyl radical or C₁-C₄-alkoxyethyl radical,
A is a straight-chain, branched and/or cyclic C₄-C₂₀-alkylene radical, a -CH₂-CH=CH-CH₂- group, a -CH₂-C≡C-CH₂- group, or a -CHR⁵-CHR⁶-(O-CHR⁷-CHR⁸)ₐ- group, in which a is a number from 1 to 5, or a -CHR ⁵-CHR⁶-S(O)_{b}-CHR⁷-CHR⁸- group, in which b is a number from 0 to 2, or a -(CHR⁵-CHR⁶)_{c}-O-R⁹-O-(CHR⁷-CHR⁸)_{d}-group, in which c and d, independently of one another, are numbers from 1 to 5,
R⁵, R⁶, R⁷, and R⁸, independently of one another, are H or methyl,
R⁹ is a -CH₂-CH=CH-CH₂- group, a -CH₂-C≡C-CH₂- group, a 1,2-phenylene radical, a 1,3-phenylene radical, a 1,4-phenylene radical, a radical of the general formula (II), 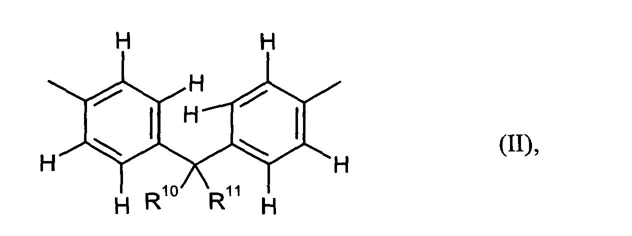 or a radical of the general formula (III), 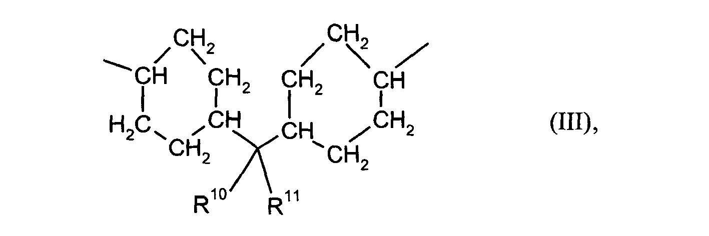 or a radical of the general formula (IV), 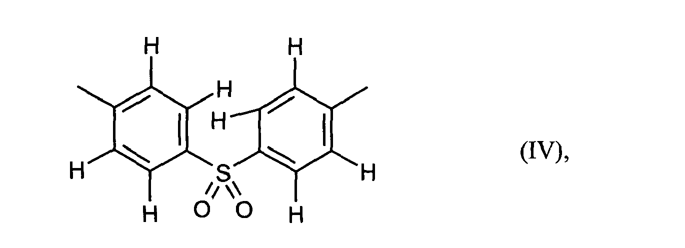 or a radical of the formula -C(=O)-R¹²-C(=O)-,
R¹⁰ and R¹¹, independently of one another, are H or C₁-C₄-alkyl, or R¹⁰ and R¹¹ together are an optionally alkyl-substituted ring having from 4 to 8 carbon atoms, and
R¹² is a straight-chain, branched and/or cyclic C₂-C₈-alkylene radical, a 1,2-phenylene radical, a 1,3-phenylene radical, or a 1,4-phenylene radical.

3. Flame-retardant polyurethane foams according to Claim 2, **characterized in that** A is a straight-chain C₄-C₆-alkylene radical, a group of the formula (VII), 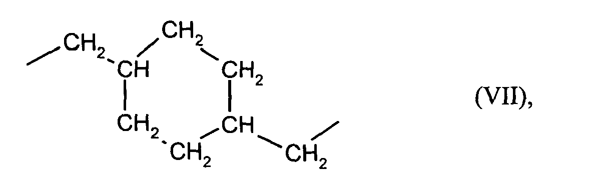 or a -CHR⁵-CHR⁶-(O-CHR⁷-CHR⁸)ₐ- group, in which a is a number from 1 to 3, and R⁵, R⁶, R⁷ and R⁸ are all H.

4. Flame-retardant polyurethane foams according to at least one of Claims 1 to 3, **characterized in that** the tetraalkyl bisphosphates are diethylene glycol bis(di-n-butyl phosphate), diethylene glycol bis(di-n-propyl phosphate), diethylene glycol bis(diethyl phosphate), 1,4-butanediol bis(di-n-propyl phosphate), or 1,4-cyclohexanedimethanol bis(diethyl phosphate).

5. Flame-retardant polyurethane foams according to at least one of Claims 1 to 4, **characterized in that** other known flame retardants are used alongside the tetraalkyl bisphosphates.

6. Flame-retardant polyurethane foams according to at least one of Claims 1 to 5, **characterized in that** they are flexible foams or rigid foams.

7. Process for production of flame-retardant polyurethane foams via reaction of organic polyisocyanates with compounds having at least two hydrogen atoms reactive towards isocyanates, and conventional blowing agents, stabilizers, activators and/or other conventional auxiliaries and additives at from 20 to 80°C, **characterized in that** an amount of from 0.5 to 30 parts, based on 100 parts of polyol component, of halogen-free tetraalkyl biphosphates whose molar mass is at least 350 g/mol which are free from hydroxy groups are used as flame retardant.

8. Use of the polyurethane foams according to Claim 1 in furniture padding, in textile inserts, in mattresses, in seats, in armrests, in modules, and also in seat coverings and cladding over technical equipment.

## Revendications

1. Mousses de polyuréthanne ignifuges qui contiennent en tant qu'agent ignifuge des tétralkylbisphosphates sans halogène, sans groupement hydroxyle, ayant un poids moléculaire supérieur ou égal à 350 g/mol.

2. Mousses de polyuréthanne ignifuges selon la revendication 1, qui contiennent en tant qu'agent ignifuge des tétralkylbisphosphates sans halogène, sans groupement hydroxyle, de formule générale (I) 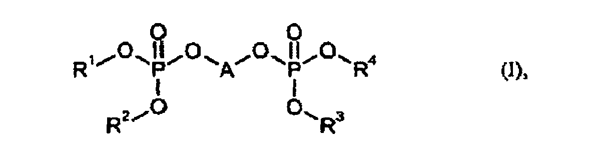 dans laquelle
R¹, R², R³, R⁴ représentent indépendamment les uns des autres un radical alkyle en C₁ à C₈ ou alcoxyéthyle en C₁ à C₄,
A représente un radical alkylène en C₄ à C₂₀ linéaire, ramifié et/ou cyclique, un groupement -CH₂-CH=CH-CH₂-, un groupement -CH₂-C≡C-CH₂-, un groupement -CHR⁵-CHR⁶-(O-CHR⁷-CHR⁸)ₐ-, dans lequel a est un nombre de 1 à 5, un groupement -CHR⁵-CHR⁶-S(O)_{b}-CHR⁷-CHR⁸-, dans lequel b est un nombre de 0 à 2, ou un groupement -(CHR⁵-CHR⁶)_{c}-O-R⁹-O-(CHR⁷-CHR⁸)_{d}-, dans lequel c et d sont indépendamment l'un de l'autre des nombres de 1 à 5,
R⁵, R⁶, R⁷, R⁸ représentent indépendamment les uns des autres H ou méthyle,
R⁹ représente un groupement -CH₂-CH=CH-CH₂-, un groupement -CH₂-C≡C-CH₂-, un radical 1,2-phénylène, un radical 1,3-phénylène, un radical 1,4-phénylène, un radical de formule générale (II), 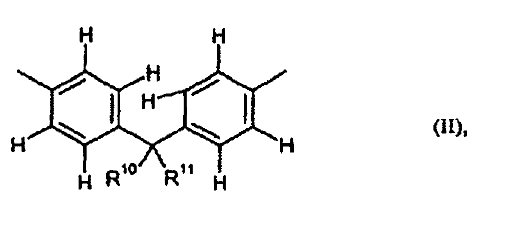 un radical de formule générale (III), 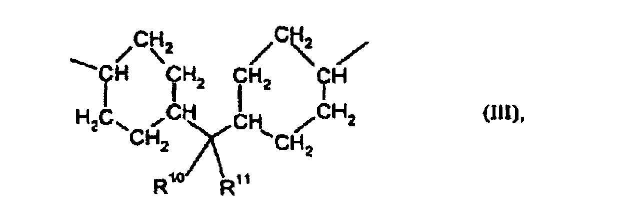 un radical de formule générale (IV), 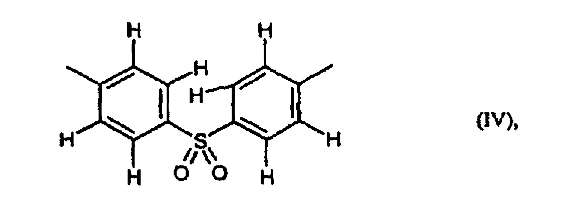 ou un radical de formule -C(=O)-R¹²-C(=O)-,
R¹⁰ et R¹¹ représentent indépendamment l'un de l'autre H ou un alkyle en C₁ à C₄ ou R¹⁰ et R¹¹ représentent ensemble un cycle ayant 4 à 8 atomes C éventuellement à substitution alkyle et
R¹² représente un radical alkylène en C₂ à C₈ linéaire, ramifié et/ou cyclique, un radical 1,2-phénylène, un radical 1,3-phénylène ou un radical 1,4-phénylène.

3. Mousses de polyuréthanne ignifuges selon la revendication 2, **caractérisées en ce que** A représente un radical alkylène en C₄ à C₆ linéaire, un groupement de formule (VII), 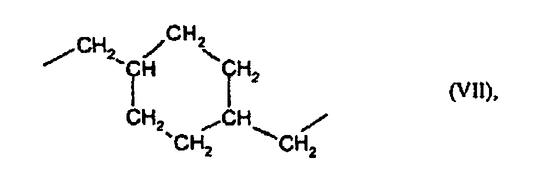 ou un groupement -CHR⁵-CHR⁶-(O-CHR⁷-CHR⁸)ₐ-, dans lequel a est un nombre de 1 à 3 et R⁵, R⁶, R⁷ et R⁸ représentent tous H.

4. Mousses de polyuréthanne ignifuges selon au moins l'une quelconque des revendications 1 à 3, **caractérisées en ce que** les tétraalkylbisphosphates sont le diéthylèneglycol-bis(di-n-butylphosphate), le diéthylèneglycol-bis(di-n-propylphosphate), le diéthylèneglycol-bis(diéthylphosphate), le 1,4-butanediol-bis(di-n-propylphosphate) ou le 1,4-cyclohexanediméthanol-bis(diéthylphosphate).

5. Mousses de polyuréthanne ignifuges selon au moins l'une quelconque des revendications 1 à 4, **caractérisées en ce que** d'autres agents ignifuges connus sont utilisés en plus des tétraalkylbisphosphates.

6. Mousses de polyuréthanne ignifuges selon au moins l'une quelconque des revendications 1 à 5, **caractérisées en ce qu'**il s'agit de mousses souples ou de mousses dures.

7. Procédé de fabrication de mousses de polyuréthanne ignifuges par réaction de polyisocyanates organiques avec des composés comportant au moins 2 atomes d'hydrogènes aptes à une réaction avec des isocyanates et des agents gonflants, des stabilisateurs, des activateurs usuels et/ou d'autres adjuvants et additifs usuels à 20 à 80 °C, **caractérisé en ce que** des tétralkylbisphosphates sans halogène, sans groupement hydroxyle, ayant un poids moléculaire supérieur ou égal à 350 g/mol sont utilisés en tant qu'agent ignifuge en une quantité de 0,5 à 30 parties par rapport à 100 parties du composant polyol.

8. Utilisation des mousses de polyuréthanne selon la revendication 1 dans des rembourrages de meubles, des rembourrages textiles, des matelas, des sièges, des accoudoirs, des éléments de construction, ainsi que dans des garnitures de sièges et d'armatures.
